# EUROPÄISCHE PATENTANMELDUNG

(11) **EP 1 834 823 A1**
(43) Veröffentlichungstag der Anmeldung: **19.09.2007**
(21) Anmeldenummer: 07004980.4
(22) Anmeldetag: 10.03.2007
(51) Int. Cl.: B60J 10/00

(54) **Dichtungsstrang und Verfahren zu seiner Herstellung**

(30) Priorität: 15.03.2006 DE 102006011873
(71) Anmelder: SaarGummi technologies S.à.r.l., 5445 Schengen (LU)
(72) Erfinder: Kotz, Stefan, 66663 Merzig (DE); Sehr, Ralf, 66679 Losheim am See (DE); Kast, Christian, D-66663 Merzig (DE)
(74) Vertreter: Bernhardt, Winfrid

(57) **Zusammenfassung**

Die Erfindung betrifft einen Dichtungsstrang mit einem Befestigungsabschnitt (1 a), über den sich der Dichtungsstrang an einem Trögerflansch befestigen lässt und der eine in das Elastomermaterial der Dichtung eingebettete Verstärkungseinlage (3a) aufweist. Gemäß der Erfindung umfasst die Verstärkungseinlage einen in Stranglängsrichtung durchgehenden Strang (3a) aus einem fihermoplastischen Polymer material und/oder zueinander in Stranglängsrichtung im Abstand angeordnete, vor zugsweise aus Stahlblech hergestellte Teilstücke.

## Beschreibung

Die Erfindung betrifft einen Dichtungsstrang mit einem Befestigungsabschnitt, über den sich der Dichtungsstrang an einem Trägerflansch befestigen lässt und der eine in das Material der Dichtung eingebettete Verstärkungseinlage aufweist.
Die Erfindung betrifft ferner ein Verfahren zur Herstellung eines solchen Dichtungsstrangs.

Dichtungsstränge der eingangs erwähnten Art sind durch Benutzung bekannt. Sie werden insbesondere zur Abdichtung von Türen und Klappen an Fahrzeugkarosserien eingesetzt. Der U-förmig ausgebildete Befestigungsabschnitt lässt sich auf einen von der Fahrzeugkarosserie vorstehenden Flansch aufstecken und an dem Flansch festklemmen. En gegenüber dem Befestigungsabschnitt flexiblerer Dichtungsabschnitt des Dichtungsstrangs legt sich im geschlossenen Zustand abdichtend gegen die Tür oder Klappe an.
Die Verstärkungseinlage dieser bekannten Dichtungsstränge besteht aus einem in Stranglängsrichtung durchgehenden Stahlblechstrang, welcher ggf. Ausstanzungen oder Einschnitte aufweist, um dem Dichtungsstrang die für eine gekrümmte Verlegung, z.B. an Türecken, erforderliche Flexibilität zu verleihen.
Die erforderliche Quertrennung solcher endlos extrudierten Dichtungsstränge bereitet oft Schwierigkeiten, weil zur Trennung des Stahlblechstrangs verhältnismäßig hohe Schneid- oder Scherkräfte erforderlich sind, der rundum in weiches Elastomermaterial eingebettete Stahlblechstrang sich während des Schneidvorgangs aber nur.schwer festspannen lässt. Außerdem erfordern die Schnittstellen eine Versiegelung, um Korrosion der Verstärkungseinlage zu unterbinden.

Der Erfindung liegt die Aufgabe zugrunde, einen neuen Dichtungsstrang der eingangs erwähnten Art zu schaffen, welcher sich problemlos trennen lässt.

Der diese Aufgabe lösende Dichtungsstrang nach der Erfindung ist dadurch gekennzeichnet, dass die Verstärkungseinlage einen in Stranglängsrichtung durchgehenden Strang aus einem thermoplastischen Polymermaterial oder/und zueinander in Stranglängsrichtung im Abstand angeordnete Teilstücke umfasst.

Vorteilhaft lässt sich das gegenüber Stahlblecheinlagen nach dem Stand der Technik weichere Polymermaterial mit geringerem Aufwand an Schneidkraft durchtrennen. Bei der alternativen Ausführungsform können zur Quertrennung der Dichtungsstränge Zwischenräume zwischen Teilstücken genutzt werden, in denen der Dichtungsstrang ausschließlich durch weiches Elastomermaterial gebildet ist. Versiegelungsmaßnahmen können in beiden Fällen entfallen. Der Polymerstrang braucht nicht rundum in das Elastomermaterial eingebettet zu sein und könnte ohne Korrosionsgefahr einen Teil der Oberfläche des Dichtungsstrangs bilden. Mit der Verwendung von Polymermaterial oder/und Teilstücken für die Verstärkungseinlage ergeben sich ferner Gewichts- und Kosteneinsparungen.

Der durchgehende Strang aus dem Polymermaterial und, der den Strang umgebende Elastomerteil des Dichtungsstrangs können koextrudiert sein.

Alternativ ließe sich bei der Extrusion des Dichtungsstrangs das die Verstärkungseinlage bildende Polymermaterial als endloser Strang zuführen, wobei während der Zuführung der Strang selbst extrudiert werden und eine Verformung oder/und Schneidbearbeitung des Strangs erfolgen kann, z.B. um zwecks Flexibilisierung an der Verstärkungseinlage Ein- oder/und Ausschnitte zu bilden.

Vorzugsweise erfolgt eine thermoplastische Umformung eines Flachbandes, um eine im Querschnitt U-förmige Verstärkungseinlage zu bilden.

In weiterer Ausgestaltung der Erfindung kann die Querschnittsfläche des durchgehenden Polymerstrangs in Stranglängsrichtung dadurch variieren, dass sich der Extrusionsspalt eines zur Herstellung des Polymerstrangs verwendeten Extrusionswerkzeugs ändert.

Bei den genannten Teilstücken handelt es sich vorzugsweise um Stahlblechteile. Jedoch auch die Teilstücke könnten aus einem Polymermaterial bestehen.

Der Abstand zwischen diesen Teilstücken kann variieren, so dass sich in Stranglängsrichtung unterschiedliche Fertigkeitseigenschaften des Dichtungsstrangs ergeben.

In einer Ausführungsform der Erfindung ließe sich der zugeführte Strang als Halter für die Verstärkungseinlage ferner bildende, voneinander getrennten Teilstücke verwenden. Auf dem Strang können z.B. Sitze für U-förmige Teilstücke aus Stahlblech gebildet sein.

Die Erfindung wird nachfolgend anhand von Ausführuhgsbeispielen und der beiliegenden, sich auf diese Ausführungsbeispiele beziehenden Zeichnungen weiter erläutert. Es zeigen:
- Fig. 1: einen Dichtungsstrang nach der Erfindung mit eine Verstärkungseinlage bildenden Teilstücken aus Stahlblech in einer geschnittenen perspektivischen Teilansicht,
- Fig. 2: eine Längsseitenteilansicht des Dichtungsstrangs von Fig. 1,
- Fig. 3: ein weiteres Ausführungsbeispiel für einen Dichtungsstrang nach der Erfindung mit einer Verstärkungseinlage aus einem Polymerwerkstoff in geschnittener perspektivischer Teilansicht, und
- Fig. 4: eine Schemadarstellung, welche die Herstellung des Dichtungsstrangs von Fig. 3 erläutert.

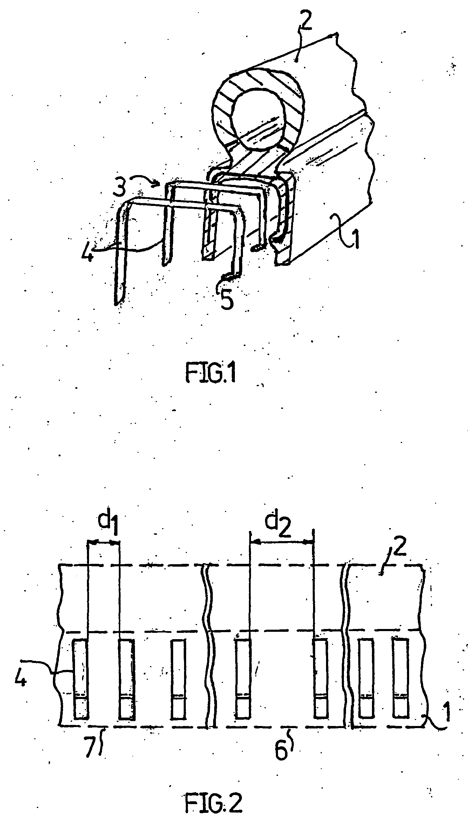

En in Fig. 1 gezeigter Dichtungsstrang weist einen Befestigungsabschnitt 1 und einen schlauchförmigen Dichtungsabschnitt 2 auf. Der Dichtungsabschnitt 2 besteht teilweise aus einem weicheren Elastomermaterial als der Befestigungsabschnitt 1.

In den im wesentlichen U-förmig ausgebildeten Befestigungsabschnitt 1 ist eine Verstärkungseinlage 3 eingebettet, die aus zueinander im Abstand angeordneten Teilstücken 4 besteht. Die U-förmigen Teilstücke weisen unterschiedlich lange U-Schenkel auf, wobei der kürzere U-Schenkel in dem betreffenden Ausführungsbeispiel mit einer Endabwinklung 5 versehen ist.

Die Teilstücke 4, die einen in Stranglängsrichtung herkömmlich durchgehenden Stahlblechstrang ersetzen, sind, wie aus Fig. 2 hervorgeht, in dem betreffenden Ausführungsbeispiel nicht in konstantem Abstand d zueinander angeordnet, sondern der Abstand variiert, um in Längenabschnitten 6 und 7 des Dichtungsstrangs gewünschte Festigkeitseigenschaften des Befestigungsabschnitts 1 zu erreichen. Wie Fig. 2 erkennen lässt, ist der Abstand d2 in dem Längenabschnitt 6 größer als der Abstand d1 in dem Längenabschnitt 7.

Bei der Herstellung des in Fig. 1 und 2 gezeigten Dichtungsstrangs werden die Teilstücke 4 mit Hilfe einer (nicht gezeigten) Zuführungseinrichtung in die Extrusionsvorrichtung eingeführt, wobei ein Steuerprogramm für die automatische Einstellung des jeweiligen Abstands d zwischen den Teilstücken sorgt. Eine hierfür geeignete Vorrichtung geht aus der EP 0 767 731 B1 hervor.

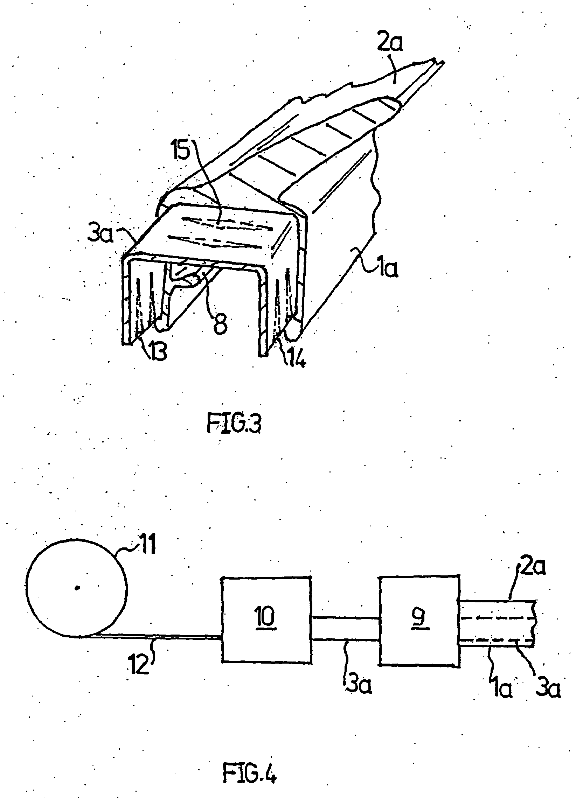

Es wird nun auf Fig. 3 bezug genommen, wo ein Dichtungsstrang mit einem Befestigungsabschnitt 1 a und einem Dichtungsabschnitt 2a gezeigt ist. Abweichend von dem vorangehenden Ausführungsbeispiel ist der Dichtungsabschnitt 1a nicht schlauch- sondern lippenförmig ausgebildet.

Eine in den Befestigungsabschnitt 1 a eingebettete, im Querschnitt U-förmige Verstärkungseinlage 3a besteht in dem betreffenden Ausführungsbeispiel aus einem thermoplastischen Polymer, z.B. PP, PE, PET oder POM. Der Polymerstrang ersetzt eine durchgehende Verstärkungseinlage, wie sie herkömmlich aus Stahlblech besteht.

Bei der Herstellung des in Fig. 3 gezeigten Dichtungsstrangs mit Hilfe einer Extrusionseinrichtung 9, wird gemäß Fig. 4 der Extrusionseinrichtung die Verstärkungseinlage als endloser Strang 3a zugeführt, um sie in das Elastomermaterial der Dichtung einzubetten.

Die Verstärkungseinlage bzw. der endlose Strang 3a tritt aus einer Formungseinrichtung 10 aus, in welche ein von einer Rolle 11 abgewickeltes Flachband 12 hineinläuft.

Innerhalb der Formungseinrichtung 10 wird aus dem Flachband die U-förmige Verstärkungseinlage 3a gebildet. Das Flachband gleitet entlang eines geheizten Formwerkzeugs, dessen Formungsfläche allmählich in eine der U-Form der Verstärkungseinlage 3a entsprechende U-Form übergeht.

Die Rolle 11 könnte durch eine das Flachband 12 unmittelbar herstellende Extrusionseinrichtung ersetzt werden.

Wie in Fig. 3 durch Strichlinien angedeutet ist, kann der Strang 3a Einschnitte 13 bis 15 aufweisen, die durch Streckung des Strangs in Längsrichtung aufgeweitet sind.

Die Formungseinrichtung 10 und die Rolle 11 zusammen könnten durch eine Extrusionseinrichtung ersetzt werden, welche direkt die U-förmige Verstärkungseinlage 3a extrudiert.

Die Verstärkungseinlage 3a ließe sich ferner direkt zusammen mit dem übrigen Dichtungsstrang in dem Extrusionswerkzeug 9 durch Koextrusion herstellen.

Die Formungseinrichtung 10 könnte durch eine Schneideinrichtung ergänzt werden, welche an der Verstärkungseinlage 3a Ein- oder/und Ausschnitte erzeugt, um sie in gewünschter Weise zu flexibilisieren. Es versteht sich, dass diese Bearbeitung unterschiedlich so erfolgen kann, dass sich in verschiedenen Längenabschnitten des Dichtungsstrangs unterschiedliche Flexibilität ergibt. Es wäre auch denkbar, die Querschnittsfläche der Verstärkungseinlage 3a durch Änderung des Austrittsspalts einer die Verstärkungseinlage erzeugenden Extrusionseinrichtung in Stranglängsrichtung zu variieren.

Die in den Fig. 1 bis 3 gezeigten Strangdichtungen lassen sich in Querrichtung leicht trennen. Das Polymermaterial der Verstärkungseinlage 3a erfordert nur geringe Schneidkräfte. Bei dem Dichtungsstrang nach Fig. 1 und 2 kann die Trennung in einem Zwischenraum zwischen zwei benachbarten Teilstücken 4 erfolgen. Hierzu könnte die genannte, die Abstände steuernde Zuführungseinrichtung mit einer entsprechenden Schneideinrichtung gekoppelt sein.

Es wäre möglich den endlosen Strang 3a als Halter für zueinander im Abstand angeordnete Stahlblechteilstücke zu nutzen und so eine Verstärkungseinlage herzustellen, in welcher Polymermaterial und Metall kombiniert sind.

## Patentansprüche

1. Dichtungsstrang mit einem Befestigungsabschnitt (1), über den sich der Dichtungsstrang an einem Trägerflansch befestigen lässt und der eine in das Material der Dichtung eingebettete Verstärkungseinlage (3) aufweist,
**dadurch gekennzeichnet,**
**dass** die Verstärkungseinlage (3,3a) einen in Stranglängsrichtung durchgehenden Strang (3a) aus einem thermoplastischen Polymermaterial oder/und zueinander in Stranglängsrichtung im Abstand angeordnete Teilstücke (4) umfasst.

2. Dichtungsstrang nach Anspruch 1,
**dadurch gekennzeichnet,**
**dass** der Dichtungsstrang unter Einbettung der Verstärkungseinlage (3) in das Elastomermaterial der Strangdichtung extrudiert ist.

3. Dichtungsstrang nach Anspruch 2,
**dadurch gekennzeichnet,**
**dass** der durchgehende Strang (3a) aus dem Polymermaterial und das den Strang (3a) umgebende Elastomermaterial der Strangdichtung koextrudiert sind.

4. Strangdichtung nach einem der Ansprüche 1 bis 3,
**dadurch gekennzeichnet,**
**dass** der durchgehende Strang (3a) zur Flexibilisierung mit Einschnitten oder/und Ausschnitten versehen ist.

5. Dichtungsstrang nach Anspruch 3,
**dadurch gekennzeichnet,**
**dass** der Strang (3a) unter Aufweitung der Ein- oder/und Ausschnitte in Stranglängsrichtung gedehnt ist.

6. Dichtungsstrang nach einem der Ansprüche 3 bis 5,
**dadurch gekennzeichnet,**
**dass** die Querschnittsfläche des durchgehenden Strangs (3a) in Stranglängsrichtung infolge Änderung des Extrusionsspaltquerschnitts variiert.

7. Strangdichtung nach einem der Ansprüche 1 bis 6,
**dadurch gekennzeichnet,**
**dass** der Abstand (d) zwischen den Teilstücken (4) variiert.

8. Dichtungsstrang nach einem der Ansprüche 1 bis 7,
**dadurch gekennzeichnet,**
**dass** die Teilstücke (4) aus Stahlblech hergestellt sind.

9. Verfahren zur Herstellung eines Dichtungsstrangs, bei dem den Dichtungsstrang bildendes Elastomermaterial unter Einbettung einer Verstärkungseinlage in den Dichtungsstrang extrudiert und dem Extrusionsspalt zur Bildung der Verstärkungseinlage ein endloser Strang (3a) zugeführt wird,
**dadurch gekennzeichnet,**
**dass** als Material für den endlosen Strang (3a) ein thermoplastisches Polymer verwendet wird.

10. Verfahren nach Anspruch 9,
**dadurch gekennzeichnet,**
**dass** der endlose Strang (3a) während der Zuführung in den Extrusionsspalt plastisch verformt oder/und einer Schneidbearbeitung unterzogen wird.

11. Verfahren nach Anspruch 9 oder 10,
**dadurch gekennzeichnet,**
**dass** der endlose Strang (3a) mit dem den Dichtungsstrang bildenden Elastomermaterial koextrudiert oder während der Zuführung zu dem Extrusionsspalt im Abstand zu dem Extrusionsspalt extrudiert wird.

12. Verfahren nach einem der Ansprüche 9 bis 11;
**dadurch gekennzeichnet,**
**dass** der zugeführte Strang als Halter für die Verstärkungseinlage ferner bildende, voneinander getrennte Teilstücke verwendet wird.
